# EUROPÄISCHE PATENTSCHRIFT

(11) **EP 2 948 329 B1**
(45) Veröffentlichungstag und Bekanntmachung des Hinweises auf die Patenterteilung: **01.02.2017**
(21) Anmeldenummer: 13810910.3
(22) Anmeldetag: 06.12.2013
(51) Int. Cl.: B60K 1/04

(54) **KRAFTFAHRZEUG MIT EINER BRENNSTOFFZELLE**
MOTOR VEHICLE HAVING A FUEL CELL
VÉHICULE À MOTEUR POURVU D'UNE PILE À COMBUSTIBLE

(30) Priorität: 24.01.2013 DE 102013201122
(43) Veröffentlichungstag der Anmeldung: 02.12.2015
(73) Patentinhaber: Bayerische Motoren Werke Aktiengesellschaft, 80809 München (DE)
(72) Erfinder: BAUER, Michael, 85774 Unterföhring (DE); BUCHNER, Andreas, 82237 Steinebach (DE); HAASE, Stefan, 80807 München (DE)
(86) Internationale Anmeldenummer: PCT/EP2013/075768
(87) Internationale Veröffentlichungsnummer: WO 2014/114400

(56) Entgegenhaltungen:
- WO-A1-2010/140030
- WO-A2-2010/031771
- DE-A1- 10 021 044

## Beschreibung

Die Erfindung betrifft ein Kraftfahrzeug mit einer Brennstoffzelle, einem Luftkompressor zum Bereitstellen von Zuluft unter Druck an der Brennstoffzelle und einem elektrischen Antriebsmotor zum Antreiben des Kraftfahrzeugs, der dazu von der Brennstoffzelle mit elektrischem Strom versorgbar ist. Ferner betrifft die Erfindung ein Verfahren zum Betreiben einer derartigen Brennstoffzelle an einem Kraftfahrzeug.

Die WO 2010/031771A2 zeigt ein landwirtschaftliches Fahrzeug mit einer Brennstoffzelle.

Brennstoffzellensysteme, insbesondere solche von Hybrid-Kraftfahrzeugen, weisen einen Luftkompressor bzw. Druckluftförderer zum Fördern von Druckluft auf, mit dem aus der Umgebung des Brennstoffzellensystems ausreichend Sauerstoff für den Betrieb der zugehörigen Brennstoffzelle bereitgestellt wird. Dazu wird im Betrieb des Brennstoffzellensystems der Luftkompressor so geregelt, dass er den für den jeweiligen Betriebszustand der Brennstoffzelle richtigen Druck und Massenfluss an Druckluft liefert. Angetrieben wird der Luftkompressor dazu von einem separaten elektrischen Kompressorantriebsmotor. Dieser kann entsprechend bei Lastsprüngen an der Brennstoffzelle in seiner Antriebsleistung separat gesteuert werden.

Gemäß der Erfindung ist ein Kraftfahrzeug mit einer Brennstoffzelle, einem Luftkompressor zum Bereitstellen von Zuluft unter Druck an bzw. in der Brennstoffzelle und einem elektrischen Antriebsmotor zum Antreiben des Kraftfahrzeugs geschaffen. Dabei ist der Antriebsmotor von der Brennstoffzelle mit elektrischem Strom versorgbar. Darüber hinaus wird von dem Antriebsmotor sozusagen in umgekehrter Richtung der Luftkompressor der Brennstoffzelle von dem Antriebsmotor angetrieben. Dieser Antrieb des Luftkompressors erfolgt vorzugsweise klassisch auf dem mechanischen Weg. Besonders bevorzugt ist der Antriebsmotor dazu mit einer drehmomentenübertragenden Kopplung mit dem Luftkompressor verbunden. Diese Kopplung kann vorteilhaft kuppelbar gestaltet sein. Der Luftkompressor kann zur Verbesserung des Gesamtwirkungsgrades dann bei bestimmten Betriebszuständen vom Antriebsmotor vollständig abgekoppelt sein.

Mit der erfindungsgemäßen Kopplung des Antriebsmotors mit dem Luftkompressor einer zugehörigen Brennstoffzelle entfällt ein ansonsten notwendiger, separater Antrieb für den Luftkompressor. Ferner ist es mit dem Antriebsmotor möglich, diesen bei Bremsvorgängen im Schub- bzw. Generatorbetrieb zu nutzen und diese mechanische Schubleistung direkt in den Luftkompressor zu leiten. Eine ansonsten notwendige Umwandlung in elektrischen Strom am Antriebsmotor und Rückumwandlung in mechanische Drehleistung am Luftkompressor entfällt damit.

Ein Abkoppeln des Luftkompressors vom Antriebsmotor kann insbesondere dann vorteilhaft sein, wenn an der Brennstoffzelle nur eine geringe Leistung abgerufen wird, der Antriebsmotor aufgrund eines Schubbetriebes aber eine größere Rekuperationsleistung anbieten kann. Diese Rekuperationsleistung kann dann vollständig im Generatorbetrieb in elektrische Energie zum Zwischenspeichern in zugehörigen Batterien genutzt werden.

Die Kopplung ist ferner vorzugsweise mit einem schaltbaren Getriebe gestaltet, das insbesondere zweistufig schaltbar ist. Ein solches Getriebe kann am Getriebeausgang auf zwei Drehgeschwindigkeiten geregelt werden. Damit können für den angeschlossenen Luftkompressor zwei Leistungsbereiche vorgegeben werden, innerhalb derer dieser seine Druckluft in eine Druckspeichereinrichtung fördern kann. Aus der Druckspeichereinrichtung, die vorzugsweise in Form eines Drucklufttanks gestaltet ist, kann dann die Druckluft bedarfsgerecht und fein dosiert an der Brennstoffzelle als Zuluft bereitgestellt werden.

Das Getriebe ist darüber hinaus bevorzugt mit einer Antriebsachse des Kraftfahrzeugs drehmomentenübertragend koppelbar. Das derartige Getriebe übernimmt mehrere Funktionen, indem es sowohl zum Antreiben eins Luftkompressors der Brennstoffzelle als auch einer Abtriebsachse des Kraftfahrzeugs dient. Im Getriebe werden also alle benötigten mechanischen Antriebe kombiniert abgebildet. Dabei können vorteilhaft Übereinstimmungen bei den erforderlichen Drehzahlen an den einzelnen Abnehmern ausgenutzt werden, um die Komplexität des Getriebes gering zu halten.

Das erfindungsgemäße Getriebe ist ferner bevorzugt mit einem Luftexpander zum Abführen von Abluft unter Druck aus der Brennstoffzelle drehmomentenübertragend koppelbar. Ein derart, insbesondere wahlweise ankoppelbarer Luftexpander stellt Rekuperationsleistung aus der aus der Brennstoffzelle unter Restdruck abgeführten Abluft bereit. Er nutzt also die Restenthalpie dieser Abluft, um sie in mechanische Drehenergie zu wandeln und zum Antrieben des Luftkompressors und/oder der Antriebsachse zu nutzen.

Die Erfindung ist entsprechend auch auf ein Verfahren zum Betreiben einer Brennstoffzelle an einem Kraftfahrzeug, bei dem mit einem Luftkompressor Zuluft unter Druck an der Brennstoffzelle bereitgestellt und das Kraftfahrzeug mit einem elektrischen Antriebsmotor angetrieben wird, gerichtet, wobei der Luftkompressor von dem Antriebsmotor angetrieben wird. Der Antrieb des Luftkompressors erfolgt bevorzugt rein mechanisch. Der Antriebsmotor wird dabei bevorzugt mit einer drehmomentenübertragenden Kopplung mit dem Luftkompressor verbunden. Diese Kopplung erfolg bevorzugt kuppelbar. Die Kopplung wird ferner vorzugsweise mit einem schaltbaren Getriebe gestaltet, das insbesondere zweistufig geschaltet wird. Darüber hinaus wird das Getriebe bevorzugt mit einer Antriebsachse des Kraftfahrzeugs drehmomentenübertragend gekoppelt bzw. die Antriebsachse wird ebenfalls an das derartige Getriebe angekoppelt. Das Getriebe wird damit zu einer Schaltstelle, an der die von der Brennstoffzelle sowie der gebremsten Antriebsachse erbrachte Leistung optimal in die jeweils erforderliche Verwendung geleitet wird. Das Getriebe kann vorzugsweise auch mit einem Luftexpander zum Abführen von Abluft unter Druck aus der Brennstoffzelle drehmomentenübertragend gekoppelt werden. Auf diese Weise kann auch die von einem solchen Luftexpander aus der Abluft der Brennstoffzelle gelieferte Rekuperationsleistung verwendungsbezogen genutzt werden.

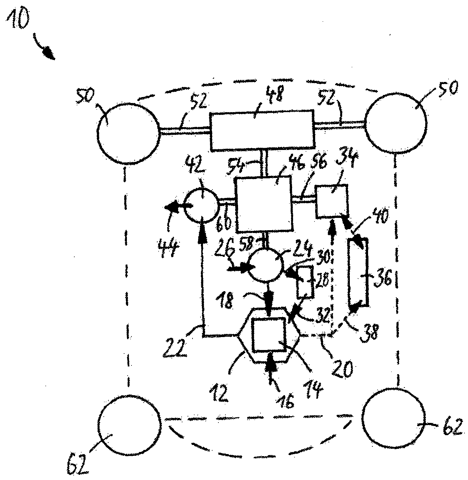

Nachfolgend wird ein Ausführungsbeispiel der erfindungsgemäßen Lösung anhand der beigefügten Zeichnung näher erläutert. Es zeigt die Fig. ein schematisches Schaubild eines Kraftfahrzeugs mit einer Brennstoffzelle gemäß der Erfindung.

Ein Kraftfahrzeug 10 umfasst eine Brennstoffzelle 12, deren Kernstück ein Anoden-Kathoden-Stapel 14 ist. An der Brennstoffzelle 12 ist ferner eine Leitung 16 zum Zuführen von Wasserstoff zu dem Anoden-Kathoden-Stapel 14, eine Leitung 18 zum Zuführen von Zuluft zu dem Anoden-Kathoden-Stapel 14, eine Leitung 20 zum Abführen von elektrischer Energie aus dem Anoden-Kathoden-Stapel 14 und eine Leitung 22 zum Abführen von Abluft aus dem Anoden-Kathoden-Stapel 14 vorgesehen. In die Leitung 18 kann im Betrieb der Brennstoffzelle 12 mit einem Luftkompressor 24 Zuluft aus der Umgebung des Kraftfahrzeugs 10 als Druckluft eingefördert werden. Die Zuluft wird durch eine Leitung 26 dem Luftkompressor 24 zugeführt. Der Luftkompressor 24 kann die Zuluft direkt durch die Leitung 18 dem Anoden-Kathoden-Stapel 14 bereitstellen oder die Zuluft in einem Drucklufttank 28 zwischenspeichern. Dazu sind eine Leitung 30 zum Zuführen von Zuluft in den Drucklufttank 28 sowie eine Leitung 32 zum Abführen von Zuluft aus dem Drucklufttank 28 hinein in den Anoden-Kathoden-Stapel 14 vorgesehen.

An dem Kraftfahrzeug 10 befinden sich ferner ein elektrischer Antriebsmotor 34, mit dem, wie nun nachfolgend näher erläutert wird, auch der Luftkompressor 24 für die Brennstoffzelle 12 angetrieben werden kann. Dem Antriebsmotor 34 kann elektrische Energie aus der Brennstoffzelle 12 mittels der Leitung 20 bereitgestellt werden. Alternativ kann die elektrische Energie aus der Brennstoffzelle 12 in einer Batterie 36 zwischengespeichert werden. Die Batterie 36 ist dazu an eine Leitung 38 zum Zuführen von elektrischer Energie aus dem Anoden-Kathoden-Stapel 14 in die Batterie 36 und einer Leitung 40 zum Abführen der elektrischen Energie aus der Batterie 36 zum Antriebsmotor 34 versehen. Auf diese Weise kann der Antriebsmotor 34 auch zumindest kurzzeitig betrieben werden, ohne dass von der Brennstoffzelle 12 bereits elektrische Energie geliefert werden muss.

Damit auch aus der Abluft der Brennstoffzelle 12 Energie rückgewonnen werden kann, ist ein Luftexpander 42 vorgesehen, dem die Abluft mittels der Leitung 22 zugeführt wird. Vom Luftexpander 42 gelangt die Abluft dann durch eine Leitung 44 in die Umgebung des Fahrzeugs 10.

Der Antriebsmotor 34 und der Luftexpander 42 sind an ein Getriebe 46 angeschlossen, das ferner auch an den Luftkompressor 24 und an eine Antriebsachse 48 mit zwei Antriebsrädern 50 angeschlossen ist. Dazu ist zwischen dem jeweiligen Antriebsrad 50 und der Antriebsachse 48 eine drehmomentenübertragende Kopplung 52 vorgesehen. Das Getriebe 46 ist an die Antriebsachse 48 mit einer drehmomentenübertragenden Kopplung 54 gekoppelt. In ähnlicher Weise ist das Getriebe 46 mit einer drehmomentenübertragenden Kopplung 56 an den Antriebsmotor 34 gekoppelt, mit einer drehmomentenübertragenden Kopplung 58 an den Luftkompressor 24 gekoppelt und mit einer drehmomentenübertragenden Kopplung 60 an den Luftexpander 42 gekoppelt. Die Kopplungen 52, 54, 56, 58 und 60 sind wahlweise zu- und abschaltbar gestaltet, so dass insbesondere der Antriebsmotor 34 seine Antriebsleistung bedarfsgerecht sowohl an die Antriebsachse 48 als auch an den Luftkompressor 24 verteilen kann.

Schließlich sind am Kraftfahrzeug 10 auch zwei nicht angetriebene Räder 62 vorgesehen, welche alternativ aber auch als ebenfalls angetriebene Räder in das oben erläuterte Antriebskonzept der Antriebsachse 48 in Form eines Allradantriebs eingebunden sein können.

### Bezugszeichen

- 10: Kraftfahrzeug
- 12: Brennstoffzelle
- 14: Anoden-Kathoden-Stapel
- 16: Leitung Zufuhr von Wasserstoff in Anoden-Kathoden-Stapel
- 18: Leitung Zufuhr von Zuluft in Anoden-Kathoden-Stapel
- 20: Leitung Abfuhr von elektrischer Energie aus Anoden-Kathoden-Stapel
- 22: Leitung Abfuhr von Abluft aus Anoden-Kathoden-Stapel
- 24: Luftkompressor
- 26: Leitung Zufuhr von Zuluft aus Umgebung
- 28: Drucklufttank
- 30: Leitung Zufuhr von Zuluft in Drucklufttank
- 32: Leitung Abfuhr von Zuluft aus Drucklufttank
- 34: Antriebsmotor
- 36: Batterie
- 38: Leitung Zufuhr von elektrischer Energie in Batterie
- 40: Leitung Abfuhr von elektrischer Energie aus Batterie
- 42: Luftexpander
- 44: Leitung Abfuhr von Abluft in Umgebung
- 46: Getriebe
- 48: Antriebsachse
- 50: Antriebsrad
- 52: Kopplung Antriebsachse an Antriebsrad
- 54: Kopplung Antriebsachse an Getriebe
- 56: Kopplung Antriebsmotor an Getriebe
- 58: Kopplung Luftkompressor an Getriebe
- 60: Kopplung Luftexpander an Getriebe
- 62: nicht angetriebenes Rad

## Patentansprüche

1. Kraftfahrzeug (10) mit einer Brennstoffzelle (12), einem Luftkompressor (24) zum Bereitstellen von Zuluft unter Druck an der Brennstoffzelle (12) und einem elektrischen Antriebsmotor (34) zum Antreiben des Kraftfahrzeugs (10), der dazu von der Brennstoffzelle (12) mit elektrischem Strom versorgbar ist, **dadurch gekennzeichnet, dass** der Luftkompressor (24) von dem Antriebsmotor (34) angetrieben ist, und dass das Getriebe (46) mit einem Luftexpander (42) zum Abführen von Abluft unter Druck aus der Brennstoffzelle (12) drehmomentenübertragend koppelbar ist.

2. Kraftfahrzeug nach Anspruch 1,
bei dem der Antriebsmotor (34) mit einer drehmomentenübertragenden Kopplung (58) mit dem Luftkompressor (24) verbunden ist.

3. Kraftfahrzeug nach Anspruch 2,
bei dem die Kopplung (58) mit einem schaltbaren Getriebe (46) gestaltet ist, das insbesondere zweistufig schaltbar ist.

4. Kraftfahrzeug nach Anspruch 3,
bei dem das Getriebe (46) mit einer Antriebsachse (48) des Kraftfahrzeugs (10) drehmomentenübertragend koppelbar ist.

5. Verfahren zum Betreiben einer Brennstoffzelle (12) an einem Kraftfahrzeug (10), bei dem mit einem Luftkompressor (24) Zuluft unter Druck an der Brennstoffzelle (12) bereitgestellt und das Kraftfahrzeug (10) mit einem elektrischen Antriebsmotör (34) angetrieben wird, **dadurch gekennzeichnet, dass** der Luftkompressor (24) von dem Antriebsmotor (34) angetrieben wird, und dass das Getriebe (46) mit einem Luftexpander (42) zum Abführen von Abluft unter Druck aus der Brennstoffzelle (12) drehmomentenübertragend gekoppelt wird.

6. Verfahren nach Anspruch 5,
bei dem der Antriebsmotor (34) mit einer drehmomentenübertragenden Kopplung (58) mit dem Luftkompressor (24) verbunden wird.

7. Verfahren nach Anspruch 6,
bei dem die Kopplung (58) mit einem schaltbaren Getriebe (46) gestaltet wird, das insbesondere zweistufig geschaltet wird.

8. Verfahren nach Anspruch 7,
bei dem das Getriebe (46) mit einer Antriebsachse (34) des Kraftfahrzeugs (10) drehmomentenübertragend gekoppelt wird.

## Claims

1. A motor vehicle (10) with a fuel cell (12), an air compressor (24) for providing pressurised supply air to the fuel cell (12) and an electric drive motor (34) for driving the motor vehicle (10) which can be supplied for this purpose with electric current by the fuel cell (12), **characterised in that** the air compressor (24) is driven by the drive motor (34), and **in that** the transmission (46) can be coupled in a torque-transmitting manner to an air expander (42) for removing pressurised waste air from the fuel cell (12).

2. A motor vehicle according to claim 1, wherein the drive motor (34) is connected to the air compressor (24) by a torque-transmitting coupling (58).

3. A motor vehicle according to claim 2, wherein the coupling (58) is configured with a switchable transmission (46) which can be switched particularly in two stages.

4. A motor vehicle according to claim 3, wherein the transmission (46) can be coupled in a torque-transmitting manner to a drive axle (48) of the motor vehicle (10).

5. A method for operating a fuel cell (12) in a motor vehicle (10), wherein pressurised supply air is supplied to the fuel cell (12) by an air compressor (24) and the motor vehicle (10) is driven by an electric drive motor (34), **characterised in that** the air compressor (24) is driven by the drive motor (34), and **in that** the transmission (46) is coupled in a torque-transmitting manner to an air expander (42) for removing pressurised waste air from the fuel cell (12).

6. A method according to claim 5, wherein the drive motor (34) is connected to the air compressor (24) by a torque-transmitting coupling (58).

7. A method according to claim 6, wherein the coupling (58) is configured with a switchable transmission (46) which is switched more especially in two stages.

8. A method according to claim 7, wherein the transmission (46) is coupled in a torque-transmitting manner to a drive axle (34) of the motor vehicle (10).

## Revendications

1. Véhicule automobile (10) équipé d'une cellule électrochimique (12) d'un compresseur d'air (24) permettant de fournir de l'air d'alimentation sous pression à la cellule électrochimique (12) et un moteur d'entraînement électrique (34) permettant d'entraîner le véhicule automatique (10) qui peut être alimenté à cet effet en courant électrique par la cellule électrochimique (12),
**caractérisé en ce que**
le compresseur d'air (24) est entraîné par le moteur d'entraînement (34) et la transmission (46) peut être couplée à un détendeur d'air (42) permettant d'évacuer l'air sous pression extrait de la cellule électrochimique (12) en transmettant le couple de rotation.

2. Véhicule automobile conforme à la revendication 1,
dans lequel le moteur d'entraînement (34) est relié au compresseur d'air (24) par un accouplement (58) transmettant le couple de rotation.

3. Véhicule automobile conforme à la revendication 2,
dans lequel l'accouplement (58) est équipé d'une transmission (46) pouvant être commutée qui peut en particulier être commutée en deux étapes.

4. Véhicule automobile conforme à la revendication 3,
dans lequel la transmission (46) peut être couplée de façon à permettre la transmission du couple de rotation avec un arbre d'entraînement (48) du véhicule (10).

5. Procédé de gestion d'une cellule électrochimique (12) d'un véhicule automobile (10) selon lequel de l'air d'alimentation sous pression est fourni à la cellule électrochimique (12) par un compresseur d'air (24) et le véhicule (10) est entraîné par un moteur d'entraînement électrique (34),
**caractérisé en ce que**
le compresseur d'air (24) est entraîné par le moteur d'entraînement (34) et la transmission (46) est couplée à un détendeur d'air (42) en permettant la transmission du couple de rotation pour permettre d'évacuer l'air sous pression extrait de la cellule électrochimique (12).

6. Procédé conforme à la revendication 5,
dans lequel le moteur d'entraînement (34) est relié au compresseur d'air (24) au moyen d'un accouplement (58) permettant la transmission du couple de rotation.

7. Procédé conforme à la revendication 6,
selon lequel l'accouplement (58) est équipé d'une transmission commutable (46) qui est en particulier commutée en deux étapes.

8. Procédé conforme à la revendication 7,
selon lequel la transmission (46) est couplée à un arbre d'entraînement (34) du véhicule (10) de façon à permettre la transmission du couple de rotation.
